# EUROPEAN PATENT SPECIFICATION

(11) **EP 3 734 105 B1**
(45) Date of publication and mention of the grant of the patent: **05.01.2022**
(21) Application number: 20170581.1
(22) Date of filing: 21.04.2020
(51) Int. Cl.: F16D 65/12

(54) **BRAKE DISC**
BREMSSCHEIBE
DISQUE DE FREIN

(30) Priority: 03.05.2019 GB 201906247
(43) Date of publication of application: 04.11.2020
(73) Proprietor: Eurac Limited, Poole, BH12 4NJ (GB)
(72) Inventor: WREN, Stewart Daniel, Poole, BH14 0EA (GB)
(74) Representative: Atkinson Wheller Limited

(56) References cited:
- EP-A2- 1 355 075
- WO-A1-2019/025532
- WO-A1-2019/025536
- DE-A1-102017 115 712

## Description

### BACKGROUND OF THE INVENTION

This invention concerns brake discs, particularly but not necessarily exclusively brake discs for motor vehicles such as high-performance sports cars.

A brake disc of a vehicle comprises a rotor comprising a friction ring that rotates with a ground-engaging wheel of the vehicle and is gripped by caliperoperated pads to slow the vehicle down when required. The friction ring must be able to resist both wear from the brake pads and heat generated by the braking. For these reasons brake disc rotors are conventionally made of cast iron.

However, as is well known, cast iron of the thickness required for a friction ring is a relatively heavy material for use in a sports car. Therefore, to reduce the weight of the brake disc as a whole and especially the unsprung weight, the friction ring may be carried on a lighter hub, eg a hub formed of a material such as sheet steel. The hub, sometimes known as a "pot" or "top hat", is in use connected to a ground-engaging wheel or an axle of the wheel.

This so-called "composite" a form of construction (which should not be confused with the possible use of fibre-reinforced ceramic materials) contrasts with monolithic forms in which the friction ring and the hub are integrally formed from the same material, in that it requires a connection between the hub and the friction ring that will withstand both rotational forces in braking (and acceleration) and transverse forces in cornering.

Various forms of connection between a cast iron rotor and a sheet steel hub have been previously proposed.

One previously known example of a composite form of brake disc known as "Blechtopf" is disclosed in German patent application DE10032972 (BMW). This comprises a rotor with a friction ring made of a cast material such as cast iron attached to a cup made of another material such as steel. The cup, which is stepped to fit over an annular flange extending axially from the friction ring, is a press fit or a shrink fit on the flange.

Another known form of composite brake disc is disclosed in patent application DE1002008018329 (Audi). This comprises a wheel hub having a tubular portion that fits inside a tubular collar of a brake rotor. The collar abuts the axially aligned edge of the wheel hub and is held against it by connecting means.

Two other forms of composite disc brake arc disclosed in international patent applications WO-02019/025536 and WO-2019/025532 (Bosch). In each of these a brake pot is fitted over a generally tubular collar extending axially from a rotor and having flat sections circumferentially spaced apart. The brake pot is secured to the collar by means of fasteners in the form of rivets each with a flat head and extending through the flat sections. Intermediate packing fills the spaces under the heads of the rivets. In '536 the packing comprises a ring extending around and under the heads of all the rivets. In '532 the packing comprises individual pieces under the heads of respective rivets, which are plastically deformed under the pressure of the rivets. In each case the pressure of the rivets pulls the brake pot material down into the flat sections and thereby draws it into tight engagement with the collar.

Here it may be noted that a press fit or a shrink fit complicates manufacture of the brake disc, and therefore makes it more expensive. Also - and this an important problem that has received little or no attention in the prior art, and which the present invention seeks particularly to tackle - it gives rise to retained stresses in the brake disc.

In use on the road, any brake disc is subject to a variety of stresses (and strains). Some of these are mechanically-induced, particularly during braking. Others are thermally-induced, as heat is generated from friction during braking. Retained stresses left from connecting the hub to the rotor by means of a press fit or shrink fit will combine with the mechanical and thermal stresses arising in use. Reducing the combined stresses reduces the risk of overload during use of the disc, allowing for a lighter brake structure and making for a lighter vehicle (which is of course particularly important for sporting vehicles) and, especially, reduced unsprung weight.

It is a particular object of the present invention to reduce stresses in a brake disc having a sheet steel hub connected to a cast iron rotor.

Thus according to a first aspect of the invention there is provided a brake disc for a vehicle, which brake disc comprises:
a rotor formed of a first material and comprising a friction ring annular about an axis of rotation and, coaxial with said friction ring, a tubular flange extending axially from the friction ring; and
coaxial with the rotor, a hub formed of a second material and comprising an end face orthogonal of said axis and securable to a wheel or an axle of the vehicle for rotation therewith about said axis and a tubular portion extending axially from said end face;
characterised in that the tubular portion of the hub and the tubular flange of the rotor slidingly fit together, one inside the other, and are secured together at fastening points circumferentially spaced apart around said axis, wherein at said fastening the tubular portion of the hub is pressed against the
tubular flange of the rotor and between the fastening points there is radial clearance between the tubular portion of the hub and the tubular flange of the rotor.

To provide the sliding fit between the tubular flange of the rotor and the tubular portion of the hub, there is a positive allowance in nominal diameter between there two components. That is to say the nominal internal diameter of the outer element (the tubular flange of the rotor or the tubular portion of the hub, as the case may be) is greater than the nominal external diameter of the inner component fitting inside it, and the dimensional tolerances are such that the actual internal diameter of the outer element is not less than the actual external diameter of the inner component fitting inside it.

The difference in nominal diameter between the hub and the rotor makes it much easier to fit them together during manufacture of the brake disc, which reduces manufacturing costs. It also distinguishes the present invention from the prior art using a press fit or a shrink fit, which are both forms of interference fit.

In addition, and of particular importance, the positive allowance in nominal diameter the hub and the rotor reduces stresses in the brake disc. Stresses eg from cold forming retained from the manufacturing process (which may conveniently be regarded as "static" stresses) can in use combine with the "dynamic" stresses arising during use of the brake disc, and so reduction of both the static and the dynamic stresses reduces the risk of overload during use and/or allows a lighter disc structure. In the present invention this is achieved as follows.
- The positive allowance in nominal diameter between the hub and the rotor means that the tubular portion of the hub is not subjected to tensile stress (around its circumference) when fitted onto the tubular flange of the rotor.
- The dimensional allowance enables the rotor including its tubular flange to expand when subject to the heat generated by friction during braking, without imposing any significant stress on the tubular portion of the hub.
- The dimensional allowance also means that the thicknesses of the tubular flange and the tubular portion of the hub can be adjusted for engineering and/or design reasons without stresses in one adversely combining with stresses in the other (wherein it should be noted that otherwise different thicknesses would give rise to different stress levels and/or different strains).
- By contrast, an interference fit like the press fit or shrink fit of the prior art necessarily gives rise to static retained stresses in the brake disc that can be exacerbated by dynamic stresses in running, and also possibly by other stresses created during manufacturing process steps such as machining the components of the disc and securing them together.

In a second aspect the invention provides a method of manufacturing a brake disc, which method comprises the steps of:
forming from a first material a rotor comprising a friction ring annular about an axis of rotation and, coaxial with the friction ring, a tubular flange extending axially from the friction ring;
forming from a second material a hub comprising an end face securable to a wheel or an axle of the vehicle for rotation therewith about said axis and a tubular portion extending axially from said end face;
characterised in that said method further comprises the steps of (a) configuring the tubular flange of the rotor and the tubular portion of the hub with mutually different diameters so as to fit slidingly together, one inside the other and (b) pressing the tubular portion of the hub into engagement with the tubular flange of the rotor at fastening points circumferentially spaced part around the axis, between which fastening points there is radial clearance between the tubular portion of the hub and the tubular flange of the rotor.

The invention will now be described, by way of example only, with reference to the accompanying drawings. The drawings provide support for the invention as claimed, but they are only exemplary and should not be used to interpret or limited the scope of the claims. Their purpose is to provide a teaching to those skilled in the art. The drawings are purely schematic, and not to scale.

### BRIEF DESCRIPTION OF THE SEVERAL VIEWS OF THE DRAWINGS

Figure 1 illustrates in vertical elevation a rotor of a disc brake according to the invention, as viewed along its axis of rotation;
Figure 2 shows the rotor of Figure 1 in cross-section at A-A (Figure 1) transversely of the axis B-B (Figure 2);
Figure 3 shows a detail C from Figure 2, relatively enlarged;
Figure 4 illustrates in vertical elevation a hub of a brake disc according to the invention, as viewed along its axis of rotation;
Figure 5 shows the hub of Figure 4 in cross-section at E-E (Figure 4) transversely of the axis D-D (Figure 5);
Figure 6 shows a detail F from Figure 4, relatively enlarged;
Figure 7 shows in vertical elevation a brake disc according to the invention comprising an assembly of the rotor of Figures 1 to 3 secured to the hub of Figures 4 to 6 by means of radially extending connecting elements;
Figure 8 shows the assembly of Figure 7 in cross-section at G-G (Figure 7) transversely of the axis X-X (Figure 8);
Figure 9 shows a detail H from Figure 8, relatively enlarged; and
Figure 10 is a representation, much enlarged with radial exaggeration and viewed as in transverse cross-section, of the connection between the rotor and the hub of a disc brake according to the invention.

### DETAILED DESCRIPTION OF EMBODIMENTS OF THE INVENTION

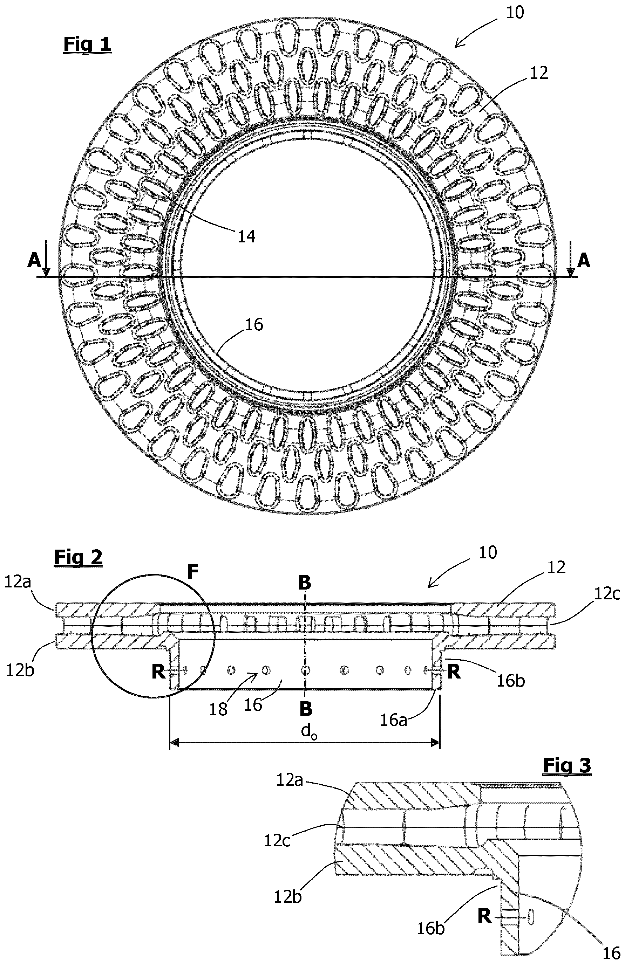

Referring first to Figures 1 to 3, the brake disc rotor 10 shown therein comprises a friction ring 12 formed of grey cast iron. The friction ring 12 is annular about an axis of rotation B-B and comprises a pair of annular elements 12a and 12b with an air-gap 12c between them that are joined together by vanes 14 that bridge the air-gap 12c and are aerodynamically formed to channel air through the air-gap 12c to cool the friction ring 12 in use.

The rotor 10 also comprises a tubular flange 16 formed integrally with the friction ring 12 and extending axially therefrom and coaxial therewith. The tubular flange 16 is formed with a plurality of holes indicated at 18 which extend radially through the wall 16a of the tubular flange 16 to receive rivets at points R, as will be described in more detail hereinafter.

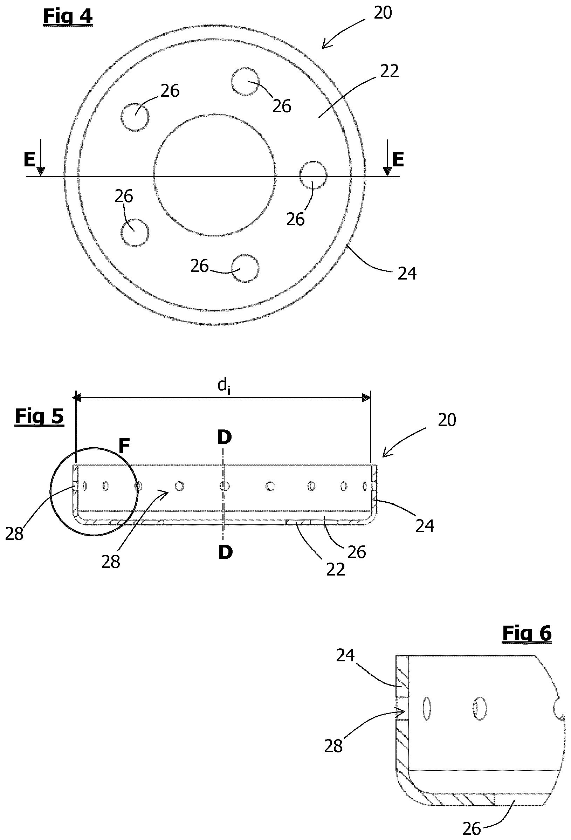

Turning now to Figures 4 to 6, the disc brake hub 20 shown therein comprises a hub formed (eg by pressing) from relatively thin sheet steel, whereby the composite disc is lighter than if it were formed entirely from iron. The hub 20 comprises an end face 22 annular about an axis of rotation D-D and a tubular portion 24 coaxial with the annular end face 22 and extending axially from it.

The annular end face 22 of the hub 20 is formed with holes 26 whereby the hub 20 may be secured to a ground-engaging wheel (not shown in the drawings) of a motor vehicle in conventional manner. The hub 20 is also formed with a plurality of holes extending radially through its wall 26a. The holes 28 are similar in number and form to the holes 18 extending through the wall 16a of the tubular flange 16 of the rotor 10 (Figures 1 to 3) and are respectively aligned circumferentially therewith.

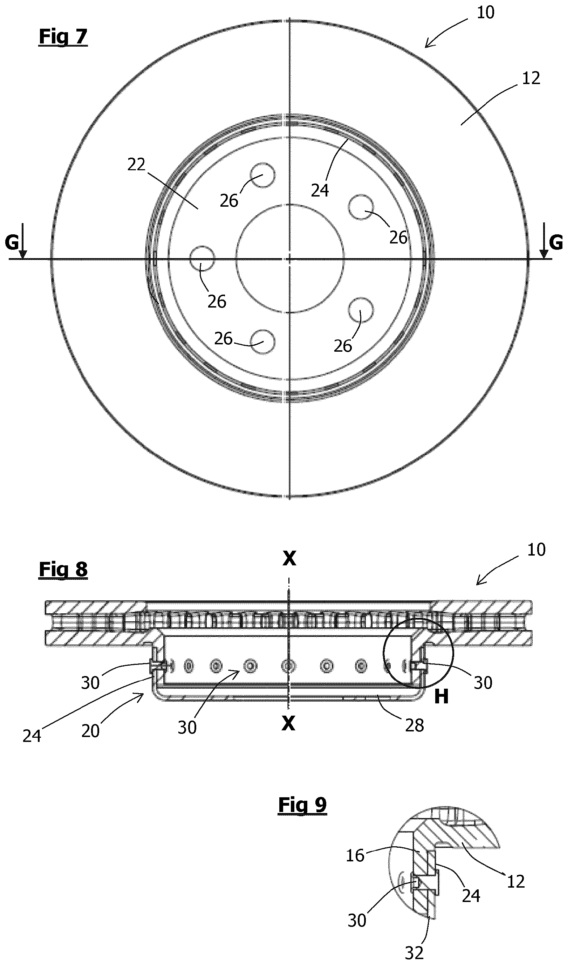

As shown by Figures 7 to 9, the rotor 10 and the hub 20 can be assembled together with the tubular portion 24 of the hub 20 fitting over the tubular flange 16 in the manner of a cap, the tubular flange 16 being formed with an annular recess 16b (see Figures 2 and 3) to receive the tubular portion 24. To enable this, the nominal internal diameter dH (see Figure 5) of the tubular portion 24 of the hub 20 is greater than the nominal external diameter dF (see Figure 2) of the recessed part 16b of the tubular flange 16, and the actual internal diameter of the tubular portion 24 of the hub 20 is not less than the actual external diameter of the recessed part 16b of the tubular flange 16, taking manufacturing tolerances into account.

In an embodiment of the invention, dH = 165.5+/-0.075mm and dF = 165.5-0.075-0.120mm. This results in a dimensional allowance of up to 0.185mm (positive) to facilitate assembly.

[It may be noted here that, while the drawings hereof show the tubular portion 24 of the hub 20 fitting outside the tubular flange 16 of the rotor 10, it would be possible instead for the tubular portion 24 to fit inside the tubular flange 16, in which case the nominal external diameter of the tubular portion 24 would be less than the nominal internal diameter of the tubular flange 16.]

When assembled together, the rotor 10 and the hub 20 are coaxial. The common axis X-X indicated in Figure 8 subsumes the rotor axis B-B (Figure 2) and the hub axis D-D (Figure 5).

During manufacture of the brake disc, the rotor 10 and the hub 20 are assembled together before the holes 18 and 28 are formed. Then the assembly is clamped (by means which persons of reasonable skill in the art will readily comprehend) to prevent relative movement axially and circumferentially between the rotor 10 and the hub 20. And then the holes 18 and 28 are drilled through both the tubular portion 24 of the hub 20 and the tubular flange 16 of the rotor 10 inside it. This ensures that the holes 18 and 28 are of similar form and mutually aligned to receive rivets 30 that secure the rotor 10 to the hub 20.

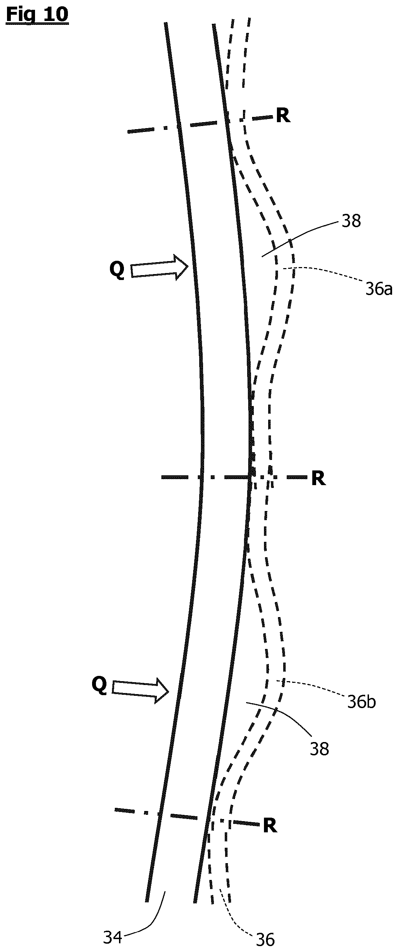

It will be understood from the foregoing description that there is a dimensional allowance 32 between the tubular portion 24 of the hub 20 and the tubular flange 12 of the rotor 10 to be fitted together, one inside the other. However, this allowance 32, being the difference between the nominal internal diameter dH of the hub 20 and the nominal external diameter dF of the rotor flange 16, is too small (a fraction of a millimetre on a diameter of more than 150mm) to be properly represented in Figures 7 to 9. Accordingly, to depict the arrangement, Figure 10 is a greatly enlarged and exaggerated view of the non-interference fit between the tubular portion 24 of the hub 20 and the tubular flange 12 of the rotor 10.

Referring then to Figure 10, part of the circumference of the rotor flange is indicated at 34 and the adjacent part of the circumference of the tubular portion of the hub is indicated at 36, these two components being shown in Figure 10 by solid lines and broken lines respectively, for clarity of illustration.

As will be understood from the foregoing description with particular reference to Figures 7 to 9, the rotor is secured to the hub by rivets 30 at circumferentially-spaced points R. When fitted over the tubular flange 34, the tubular portion 36 of the hub has a circular cross-section, but when the rivets 30 are driven home to secure the joint, they press the tubular portion of the hub 36 radially inwards towards and onto the tubular flange 34. Thus, as shown (much exaggerated) in Figure 10, the tubular portion of the hub 36 is flexed to form bows 36a, 36b etc between the riveting points R. (Otherwise expressed, the tubular portion of the hub 36 takes on a quasi-sinusoidal waveform around its circumference).

The beneficial effects of this in relation to stresses in the brake disc will now be considered first with regard to static stress.
- The flexure of the tubular portion 36 as the bows 36a, 36b etc are formed gives rise to stresses in the hub, but these are relatively small and to a degree self-cancelling. Bending stresses are proportional to the degree of curvature, so when as in the present invention the degree of curvature is small (being limited by the small difference between dF and dH) the imposed bending stresses are small.
- In particular, the imposed bending stresses are small in comparison with the tensile stresses imposed on a hub which is a press fit or a shrink fit on a rotor flange as in the prior art exemplified by DE10032972. This is because the arrangement of DE10032972 imposes a strain (to which stress is proportional) which is Pi times the difference in diameter between the hub before and after fitting.
- Further, the bending stresses in the bows 36a, 36b etc are tensile on the outside of each bow and compressive on the inside. Overall, these tend to cancel one another out (at least, with small amounts of curvature as in the present invention); and the change from one to the other through the thickness of the hub material results in a null position (zero stress) around the mid-point.
- Thus the present invention reduces static stresses in the brake disc in comparison with press fit and shrink fit arrangements. In addition it allows thermal expansion of the hub during use of the brake actually to reduce stresses in the hub.

The invention reduces dynamic stresses as follows.
- In use, the rotor of a disc brake embodying the invention becomes hot as a result of friction when braking is applied to the vehicle equipped with the disc brake. This causes the rotor flange 34 to expand radially as indicated by the arrows Q in Figure 10.
- If the tubular portion of the hub 36 were an interference fit on the flange 34, as in the prior art exemplified by DE10032972, this expansion would cause a commensurate circumferential stretching of the tubular portion of the hub 36. Thus the hub would be subject to dynamic (thermally induced) stress in addition to the static stresses arising from and residual to the press fit or shrink fit used in its application to the rotor flange.
- But in the present invention this does not happen, for two reasons. First, the bows 36a, 36b etc of the tubular portion of the hub 36 are able to flex when the rotor flange 34 expands in use as indicated by the arrows Q, rather than the tubular portion of the hub 36 being stretched circumferentially; and because the bending stresses in the bows 36a, 36b etc are small, any change in these stresses as a result of the thermally-induced expansion of the rotor flange 34 as indicated by the arrows Q is similarly small. And second, radially outward thermal expansion of the rotor flange 34 as indicated by the arrows Q moves the riveting points R slightly further apart, as the circumference of the rotor flange 34 increases, and this in turn tends to reduce the curvature of each bow 36a, 36b etc, thereby countering any increase in dynamic stress caused by the expansion.
- Thus the present invention reduces dynamic stresses in the brake disc, as well as static stresses.

Finally with particular regard to Figure 10, it should be noted that when the securing rivets are driven home at points R they press the tubular portion of the hub into engagement with the rotor flange 34, while leaving gaps 38 (greatly exaggerated in Figure 10) between the bows 36a, 36b etc and the adjacent parts of the tubular flange 34. Inasmuch as the bows 36a, 36b etc are clear of the surface of the rotor flange 34, the term "clearance" as used herein should be interpreted accordingly.

For completeness it should be noted that when the hub and the rotor have been secured together by rivets as described hereinbefore, the assembly may be machined for balancing or other purposes. It should also be understood that materials other than sheet steel (for the hub) and grey cast iron (for the rotor) may be used in the invention.

## Claims

1. A brake disc for a vehicle, which brake disc comprises:
a rotor (10) formed of a first material and comprising a friction ring (12) annular about an axis of rotation (B-B) and, coaxial with said friction ring (12), a tubular flange (16) extending axially from the friction ring (12); and
coaxial with the rotor (10), a hub (20) formed of a second material and comprising an end face (22) orthogonal of said axis (B-B) and securable to a wheel or an axle of the vehicle for rotation therewith about said axis (B-B) and a tubular portion (24) extending axially from said end face (22);
**characterised in that** the tubular portion (24) of the hub (20) and the tubular flange (16) of the rotor (10) slidingly fit together, one inside the other, and are secured together at fastening points (R) circumferentially spaced apart around said axis (B-B), wherein at said fastening points (R) the tubular portion (24) of the hub (20) is pressed against the tubular flange (16) of the rotor (10) and between the fastening points (R) there is radial clearance (38) between the tubular portion (24) of the hub (20) and the tubular flange (16) of the rotor (10).

2. A brake disc as claimed in Claim 1 **characterised in that** said radial clearance (38) is less than 0.1mm.

3. A brake disc as claimed in Claim 1 or Claim 2 **characterised in that** said first material comprises cast iron and said second material comprises steel which if formed in a sheet radially thinner than the tubular flange (16) of the rotor (10).

4. A brake disc as claimed in any preceding claim **characterised in that** the tubular flange (16) of the rotor (10) fits inside the tubular portion (24) of the hub (20).

5. A brake disc as claimed in any preceding claim **characterised in that** the tubular flange (16) of the rotor (10) is formed with an annular recess (16b) to receive the tubular portion (24) of the hub (20).

6. A brake disc as claimed in any preceding claim **characterised in that** the tubular portion (24) of the hub (20) and the tubular flange (16) of the rotor (10) are secured together at fastening points (R) by a plurality of rivets (30) radially extending and circumferentially spaced apart.

7. A method of manufacturing a brake disc, which method comprises the steps of:
forming from a first material a rotor (10) comprising a friction ring (12) annular about an axis of rotation (B-B) and, coaxial with the friction ring (12), a tubular flange (16) extending axially from the friction ring (12); and
forming from a second material a hub (20) comprising an end face (22) securable to a wheel or an axle of the vehicle for rotation therewith about said axis (B-B) and a tubular portion (24) extending axially from said end face (22);
**characterised in that** said method further comprises the steps of (a) configuring the tubular flange (16) of the rotor (10) and the tubular portion (24) of the hub (20) with mutually different diameters (dF), (dH) so as to fit slidingly together, one inside the other, and (b) pressing the tubular portion (24) of the hub (20) into engagement with the tubular flange (16) of the rotor (10) at fastening points (r) circumferentially spaced apart around the axis (B-B), between which fastening points (R) there is radial clearance (38) between the tubular portion (24) of the hub (20) and the tubular flange (16) of the rotor (10).

8. A method of manufacturing a brake disc as claimed in Claim 7 **characterised in that** the respective diameters (dF), (dH) of the flange (16) and the tubular portion (24) are not more than 0.2mm different from one another.

9. A method of manufacturing a brake disc as claimed in Claim 7 or Claim 8 **characterised in that** said first material comprises cast iron and said second material comprises steel and is formed in a sheet radially thinner than the tubular flange (16) of the rotor (10).

10. A method of manufacturing a brake disc as claimed in any of Claims 7 to 9 **characterised in** forming the tubular flange (16) of the rotor (10) to fit inside the tubular portion (24) of the hub (20).

11. A method of manufacturing a brake disc as claimed in any of Claims 7 to 10 **characterised in that** said method further comprises the step of forming the tubular flange (16) of the rotor (10) with an annular recess (16b) to receive the tubular portion (24) of the hub (20).

12. A method of manufacturing a brake disc as claimed in any of Claims 7 to 11 **characterised in that** said method further comprises the step of temporarily clamping the tubular portion (24) of the hub (20) and the tubular flange (16) of the rotor (10) when fitted together and, while they are so clamped, drilling through them a plurality of holes (18, 28) extending radially and circumferentially spaced-apart.

13. A method of manufacturing a brake disc as claimed in Claim 12 **characterised in that** said method further comprises the step of securing rivets (30) through said holes (18, 28) to secure the hub (20) to the rotor (10).

14. A method of manufacturing a brake disc as claimed in Claim 13 **characterised in that** each said rivet (30) as a head and a tail and said method further comprises driving the respective heads and tails together and into compressive engagement with the tubular portion (24) of the hub (20) and the tubular flange (16) of the rotor (10).

15. A method of manufacturing a brake disc as claimed in Claim 14 **characterised in that** the tubular portion (24) of the hub (20) is bowed radially outwards between the rivets (30) to provide thereat radial clearance (38) between the tubular portion (24) of the hub (20) and the tubular flange (16) of the rotor (10).

## Patentansprüche

1. Eine Bremsscheibe für ein Fahrzeug, wobei die Bremsscheibe umfasst:
einen Rotor (10), der aus einem ersten Material besteht und einen um eine Drehachse (B-B) ringförmigen Reibungsring (12) und, koaxial zu diesem Reibungsring (12), einen rohrförmigen Flansch (16) aufweist, der sich axial von dem Reibungsring (12) erstreckt; und
koaxial mit dem Rotor (10) eine Nabe (20), die aus einem zweiten Material besteht und eine Endfläche (22), die orthogonal zu der Achse (B-B) ist und an einem Rad oder einer Achse des Fahrzeugs zur Drehung um die Achse (B-B) befestigt werden kann, und einen rohrförmigen Abschnitt (24), der sich axial von der Endfläche (22) erstreckt, umfasst,
**dadurch gekennzeichnet, dass** der rohrförmige Abschnitt (24) der Nabe (20) und der rohrförmige Flansch (16) des Rotors (10) gleitend ineinanderpassen und an Befestigungspunkten (R), die in Umfangsrichtung um die Achse (B-B) beabstandet sind, aneinander befestigt sind, wobei an den Befestigungspunkten (R) der rohrförmige Abschnitt (24) der Nabe (20) gegen den rohrförmigen Flansch (16) des Rotors (10) gedrückt wird und zwischen den Befestigungspunkten (R) ein radiales Spiel (38) zwischen dem rohrförmigen Abschnitt (24) der Nabe (20) und dem rohrförmigen Flansch (16) des Rotors (10) besteht.

2. Bremsscheibe nach Anspruch 1, **dadurch gekennzeichnet, dass** das Radialspiel (38) weniger als 0,1 mm beträgt.

3. Eine Bremsscheibe nach Anspruch 1 oder Anspruch 2, **dadurch gekennzeichnet, dass** das erste Material Gusseisen umfasst und das zweite Material Stahl umfasst, die in einem Blech ausgebildet ist, welches radial dünner ist als der rohrförmige Flansch (16) des Rotors (10).

4. Eine Bremsscheibe nach einem der vorhergehenden Ansprüche, **dadurch gekennzeichnet, dass** der rohrförmige Flansch (16) des Rotors (10) in das Innere des rohrförmigen Teils (24) der Nabe (20) passt.

5. Eine Bremsscheibe nach einem der vorhergehenden Ansprüche, **dadurch gekennzeichnet, dass** der rohrförmige Flansch (16) des Rotors (10) mit einer ringförmigen Aussparung (16b) ausgestattet ist, um den rohrförmigen Teil (24) der Nabe (20) aufzunehmen.

6. Eine Bremsscheibe nach einem der vorhergehenden Ansprüche, **dadurch gekennzeichnet, dass** der rohrförmige Abschnitt (24) der Nabe (20) und der rohrförmige Flansch (16) des Rotors (10) an Befestigungspunkten (R) durch mehrere Nieten (30), die sich radial erstrecken und in Umfangsrichtung voneinander beabstandet sind, aneinander befestigt sind.

7. Ein Verfahren zur Herstellung einer Bremsscheibe, wobei das Verfahren die folgenden Schritte umfasst:
Ausbilden eines Rotors (10) aus einem ersten Material, der einen um eine Drehachse (B-B) ringförmigen Reibungsring (12) und koaxial zu dem Reibungsring (12) einen rohrförmigen Flansch (16) aufweist, der sich axial von dem Reibungsring (12) erstreckt;
und Ausbilden einer Nabe (20) aus einem zweiten Material, die eine Endfläche (22), die an einem Rad oder einer Achse des Fahrzeugs zur Drehung damit um die Achse (B-B) befestigt werden kann, und einen rohrförmigen Abschnitt (24) aufweist, der sich axial von der Endfläche (22) erstreckt;
**dadurch gekennzeichnet, dass** das Verfahren ferner die folgenden Schritte umfasst: (a) Konfigurieren des rohrförmigen Flansches (16) des Rotors (10) und des rohrförmigen Abschnitts (24) der Nabe (20) mit zueinander unterschiedlichen Durchmessern (dF), (dH), so dass sie gleitend ineinanderpassen, und (b) Pressen des rohrförmigen Abschnitts (24) der Nabe (20) in Eingriff mit dem rohrförmigen Flansch (16) des Rotors (10) an Befestigungspunkten (r), die in Umfangsrichtung um die Achse (B-B) beabstandet sind, wobei zwischen den Befestigungspunkten (R) ein radiales Spiel (38) zwischen dem rohrförmigen Abschnitt (24) der Nabe (20) und dem rohrförmigen Flansch (16) des Rotors (10) besteht.

8. Ein Verfahren zur Herstellung einer Bremsscheibe nach Anspruch 7, **dadurch gekennzeichnet, dass** die jeweiligen Durchmesser (dF), (dH) des Flansches (16) und des rohrförmigen Teils (24) nicht mehr als 0,2 mm voneinander abweichen.

9. Ein Verfahren zur Herstellung einer Bremsscheibe nach Anspruch 7 oder Anspruch 8, **dadurch gekennzeichnet, dass** das erste Material Gusseisen umfasst und das zweite Material Stahl umfasst und in einem Blech geformt ist, das radial dünner als der rohrförmige Flansch (16) des Rotors (10) ist.

10. Ein Verfahren zur Herstellung einer Bremsscheibe nach einem der Ansprüche 7 bis 9, **dadurch gekennzeichnet, dass** der rohrförmige Flansch (16) des Rotors (10) so geformt wird, dass er in den rohrförmigen Abschnitt (24) der Nabe (20) passt.

11. Ein Verfahren zur Herstellung einer Bremsscheibe nach einem der Ansprüche 7 bis 10, **dadurch gekennzeichnet, dass** das Verfahren ferner den Schritt des Ausbildens des rohrförmigen Flansches (16) des Rotors (10) mit einer ringförmigen Aussparung (16b) zur Aufnahme des rohrförmigen Teils (24) der Nabe (20) umfasst.

12. Ein Verfahren zur Herstellung einer Bremsscheibe nach einem der Ansprüche 7 bis 11, **dadurch gekennzeichnet, dass** das genannte Verfahren ferner den Schritt des vorübergehenden Klemmens des rohrförmigen Teils (24) der Nabe (20) und des rohrförmigen Flansches (16) des Rotors (10), wenn sie zusammengefügt sind, umfasst und, während sie so geklemmt sind, das Durchbohren von mehreren Löchern (18, 28), die sich radial und umlaufend voneinander erstrecken.

13. Ein Verfahren zur Herstellung einer Bremsscheibe nach Anspruch 12, **dadurch gekennzeichnet, dass** das Verfahren ferner den Schritt des Befestigens der Nieten (30) durch die Löcher (18, 28) umfasst, um die Nabe (20) an dem Rotor (10) zu befestigen.

14. Verfahren zur Herstellung einer Bremsscheibe nach Anspruch 13, **dadurch gekennzeichnet, dass** jede der Nieten (30) einen Kopf und ein Ende hat und dass das Verfahren ferner das Zusammenpressen der jeweiligen Köpfe und Enden mit dem rohrförmigen Teil (24) der Nabe (20) und dem rohrförmigen Flansch (16) des Rotors (10) umfasst.

15. Ein Verfahren zur Herstellung einer Bremsscheibe nach Anspruch 14, **dadurch gekennzeichnet, dass** der rohrförmige Teil (24) der Nabe (20) radial zwischen den Nieten (30) nach außen gebogen ist, um dort einen radialen Abstand (38) zwischen dem rohrförmigen Teil (24) der Nabe (20) und dem rohrförmigen Flansch (16) des Rotors (10) zu schaffen.

## Revendications

1. Disque de frein pour un véhicule, ledit disque de frein comprenant :
un rotor (10) composé d'un premier matériau, et comprenant une bague de friction (12) annulaire autour d'un axe de rotation (B-B) et une bride tubulaire (16), coaxiale avec ladite bague de friction (12), et déployée axialement depuis la bague de friction (12) ; et
un moyeu (20), coaxial avec le rotor (10), composé d'un deuxième matériau et comprenant une face terminale (22) perpendiculaire audit axe (B-B), et pouvant être fixé sur une roue ou un essieu du véhicule pour tourner avec celui-ci autour dudit axe (B-B), et une partie tubulaire (24) déployée axialement depuis ladite face terminale (22) ;
**caractérisé en ce que** la partie tubulaire (24) du moyeu (20) et la bride tubulaire (16) du rotor (10) s'emmanchent l'une dans l'autre, et sont fixées ensemble en des points de fixation (R) espacés de façon circonférentielle autour dudit axe (B-B), la partie tubulaire (24) du moyeu (20) étant pressée, auxdits points de fixation (R), contre la bride tubulaire (16) du rotor (10), et, entre les points de fixation (R), un jeu radial (38) étant présent entre la partie tubulaire (24) du moyeu (20) et la bride tubulaire (16) du rotor (10).

2. Un disque de frein selon la revendication 1, **caractérisé en ce que** ledit jeu radial (38) est inférieur à 0,1 mm.

3. Un disque de frein selon la revendication 1 ou la revendication 2, **caractérisé en ce que** ledit premier matériau comprend de la fonte et ledit deuxième matériau comprend de l'acier réalisé dans une feuille radialement plus mince que la bride tubulaire (16) du rotor (10).

4. Un disque de frein selon une quelconque des revendications précédentes, **caractérisé en ce que** la bride tubulaire (16) du rotor (10) tient à l'intérieur de la partie tubulaire (24) du moyeu (20).

5. Un disque de frein selon une quelconque des revendications précédentes, **caractérisé en ce que** la bride tubulaire (16) du rotor (10) est réalisée avec un évidement annulaire (16b) pour recevoir la partie tubulaire (24) du moyeu (20).

6. Un disque de frein selon une quelconque des revendications précédentes, **caractérisé en ce que** la partie tubulaire (24) du moyeu (20) et la bride tubulaire (16) du rotor (10) sont fixées ensemble en des points de fixation (R) par une pluralité de rivets (30) déployés radialement et espacés les uns des autres dans un plan circonférentiel.

7. Un procédé de fabrication d'un disque de frein, ledit procédé comprenant les étapes suivantes :
réalisation, avec un premier matériau, d'un rotor (10) comprenant une bague de friction (12) annulaire autour d'un axe de rotation (B-B) et une bride tubulaire (16), coaxiale avec ladite bague de friction (12), et déployée axialement depuis la bague de friction (12) ; et
réalisation, avec un deuxième matériau, d'un moyeu (20) comprenant une face terminale (22) pouvant être fixée sur une roue ou un essieu du véhicule pour tourner avec celui-ci autour dudit axe (B-B), et une partie tubulaire (24) déployée axialement depuis ladite face terminale (22) ;
**caractérisé en ce que** ledit procédé comprend en outre les étapes (a) de configuration de la bride tubulaire (16) du rotor (10) et de la partie tubulaire (24) du moyeu (20) avec des diamètres mutuellement différents (dF), (dH) de façon à s'emmancher l'un dans l'autre, et (b) de pressage de la partie tubulaire (24) du moyeu (20) pour qu'elle s'engage avec la bride tubulaire (16) du rotor (10) en des points de fixation (r) espacés de façon circonférentielle autour de l'axe (B-B), un jeu radial (38) étant présent, entre lesdits points de fixation (R), entre la partie tubulaire (24) du moyeu (20) et la bride tubulaire (16) du rotor (10).

8. Un procédé de fabrication d'un disque de frein selon la revendication 7, **caractérisé en ce que** la différence entre les diamètres respectifs (dF), (dH) de la bride (16) et de la partie tubulaire (24) ne dépasse pas 0,2 mm.

9. Un procédé de fabrication d'un disque de frein selon la revendication 7 ou la revendication 8, **caractérisé en ce que** ledit premier matériau comprend de la fonte et ledit deuxième matériau comprend de l'acier, et étant réalisé dans une feuille radialement plus mince que la bride tubulaire (16) du rotor (10).

10. Un procédé de fabrication d'un disque de frein selon une quelconque des revendications 7 à 9, **caractérisé par** la réalisation de la bride tubulaire (16) du rotor (10) de façon qu'elle tienne à l'intérieur de la partie tubulaire (24) du moyeu (20).

11. Un procédé de fabrication d'un disque de frein selon une quelconque des revendications 7 à 10, **caractérisé en ce que** ledit procédé comprend en outre l'étape de réalisation de la bride tubulaire (16) du rotor (10) avec un évidement annulaire (16b) pour recevoir la partie tubulaire (24) du moyeu (20).

12. Un procédé de fabrication d'un disque de frein selon une quelconque des revendications 7 à 11, **caractérisé en ce que** ledit procédé comprend en outre l'étape de fixation provisoire de la partie tubulaire (24) du moyeu (20) et la bride tubulaire (16) du rotor (10) lorsqu'elles sont montées ensemble, et, lorsqu'elles sont ainsi fixées, de perçage à travers celles-ci d'une pluralité d'orifices (18, 28) s'étendant radialement et espacés les uns des autres dans un plan circonférentiel.

13. Un procédé de fabrication d'un disque de frein selon la revendication 12, **caractérisé en ce que** ledit procédé comprend en outre l'étape de fixation de rivets (30) à travers lesdits orifices (18, 28) pour la fixation du moyeu (20) sur le rotor (10).

14. Un procédé de fabrication d'un disque de frein selon la revendication 13, **caractérisé en ce que** chacun desdits rivets (30) possède une tête et une tige, et ladite méthode comprenant en outre l'enfoncement desdites têtes et tiges ensemble afin qu'elles s'engagent par compression avec la partie tubulaire (24) du moyeu (20) et la bride tubulaire (16) du rotor (10).

15. Un procédé de fabrication d'un disque de frein selon la revendication 14, **caractérisé en ce que** la partie tubulaire (24) du moyeu (20) est incurvée radialement vers l'extérieur entre les rivets, de façon à former un jeu radial (38) entre la partie tubulaire (24) du moyeu (20) et la bride tubulaire (16) du rotor (10).
